# EUROPEAN PATENT APPLICATION

(11) **EP 1 585 016 A1**
(43) Date of publication of application: **12.10.2005**
(21) Application number: 04008621.7
(22) Date of filing: 08.04.2004
(51) Int. Cl.: G06F 3/033, B43K 23/004, B43K 23/10, B43K 23/008, B43K 19/14, B43K 19/08, B43K 19/04, B43K 19/00

(54) **Convertible input element for an electronic device**

(71) Applicant: SIEMENS AKTIENGESELLSCHAFT, 80333 München (DE)
(72) Inventor: Ventura, Alessandro, 20158 Mailand (IT)

(57) **Abstract**

Input element (IE) for an electronic device (ED) having a display unit (DU) for displaying at least one element (E) representing input information, comprising a pen-shaped carrier element (C) with a tip (T) for selecting the at least one element (E) from the display unit (DU), said carrier element (C) having a longitudinal axis (LA); at least one surface element (S) arranged around the carrier element (C) constituting an outer diameter of the input element; a control element (CTRL) for altering the outer diameter of the input element (IE) by extending outwards or retracting inwards said at least one surface element (S) in respect to said longitudinal axis (LA) of said pen-shaped carrier element (C).

## Description

The invention relates to an input element for an electronic device.

Nowadays electronic devices, particularly mobile electronic devices as e.g. PDA's or organizers, are currently miniaturised to improve portability. In this context also the man machine interface is downsized. In order to maintain a user-friendlyness, certain units are not further downsized, because this would make them awkward to use, but rather exhibit a multi-functionality.

An example therefor is the use of a touchscreen as display unit and as input device. By touching certain areas or elements on the touchscreen, the user can input information in the electronic device.

Nevertheless touchscreens for portable electronic devices are rather small. Therefore instead of using the fingers, whose tip is delicate enough to select from a plurality of elements displayed on the small touchscreen, a specific input device with a fine tip is being used.

This input device is normally pen-shaped to enable an ergonomic handling. If not in use, this pen-shaped input device is attached at or accommodated in the housing of the electronic device as otherwise the user might forget the input device.

Therefore, the input device itself is miniaturised, too, which makes it less convenient to use.

Based on the foregoing description it is an object of the invention to offer an input device, which can be conveniently carried with the electronic device and at the same time handled easily.

This object is achieved by an input device as disclosed in claim 1.

Investigations performed by the inventor revealed, that a diameter reduced in comparison to normal pens is the main obstacle for an easy handling of an input device or input element respectively, having the form of a pen. Therefore a solution is offered to alter, that is to increase or to decrease, the diameter of the input device.
This is done by at least one surface element which is aligned around a pen-shaped carrier element of the input device. This surface element can be extended outwards for increasing the diameter. The movement is controlled by a control unit.

Such an input device enables an easy handling during transport as well as for inputting information.

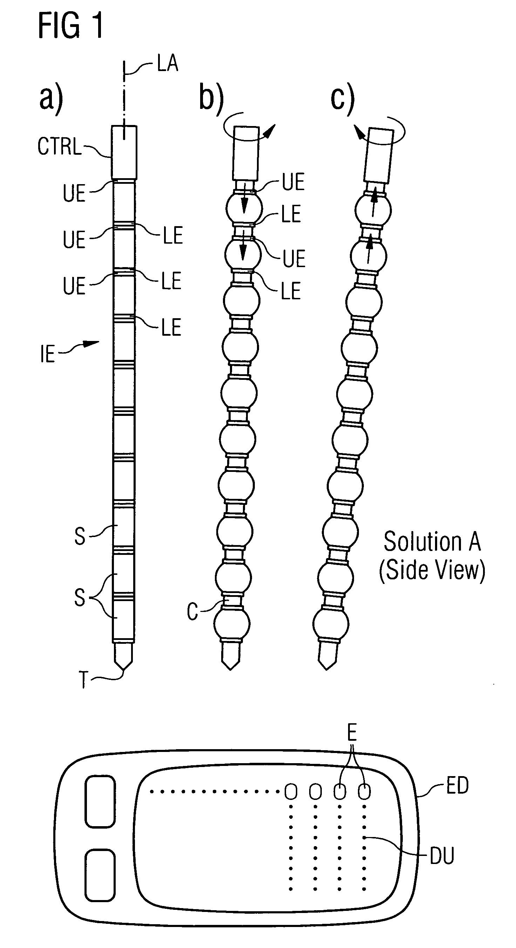

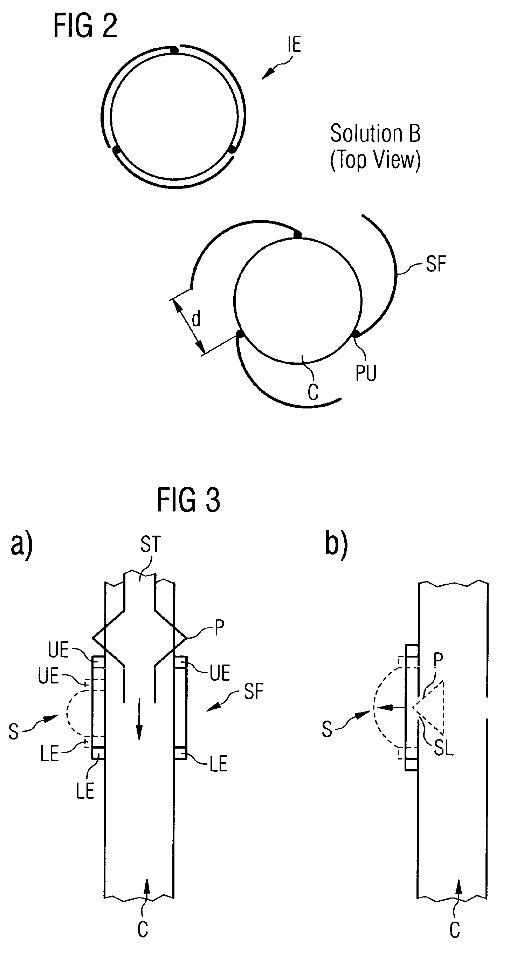

Further advantages are detailed in relation with Fig. 1 and 2, which depict:
Fig. 1 a, b, c: A realisation with cylindrical surface elements aligned along a longitudinal axis of the pen;
Fig. 2 a, b: A realisation with surface elements that are pivotable in respect of the surface of the pen-shaped carrier element.
Fig. 3a, b: An interaction mode between protrusions, control unit and surface element

In Fig. 1 an input element IE is depicted. In Fig. 1a) said input element is shown in a "transport mode" with small diameter, in Fig. 1b) the increasing of the diameter and in Fig. 1 c) the decreasing of the diameter. Identical components are denoted with the same reference sign.

The input element IE comprises a pen-shaped carrier element C, which has a tip T for selecting information, represented by an element E, from a display unit DU of an electrical device ED. A longitudinal axis LA can be defined along the carrier element. The display unit can be a touchscreen or any other screen reacting in respect to force, capacity changes or other electrical or mechanical quantities.

The carrier element C is - with exception of the area of the tip T covered by surface elements S. These surface elements S are cylindrical elements having an inner diameter adapted at the carrier element and an outer diameter determined by the inner diameter and the thickness of the cylinder wall. Each of the surface elements comprises an upper edge UE and a lower edge LE in respect of the tip T. The surface elements S are at least partly made of elastic material, so that they can be compressed. The material of the carrier element is adapted in respect of the interaction with the respective touchscreen, i.e. whether there are capacity changes, resistance changes, etc. The outer diameter of the surface elements constitutes an diameter of the input element IE.

At the end of the carrier element C opposite to the tip T a control element CTRL is foreseen for altering the diameter of the input element.

In the "transport mode", which is used for transporting the input device in or at the housing of the electronic device in Fig. 1 a) the surface elements fit close to each other, so that the carrier element C is not visible with exception of the Tip T.

By screwing the control element CTRL in one direction, the upper edges UE are forced towards the tip T, thus bending the surface of the cylindrical surface element S outwards. The lower edges LE remain substantially at the same position. Between the individual surface elements there is now in Fig. 1b) a spacing, so that the carrier element C can be partly seen.

By screwing the control element CTRL in the opposite direction (Fig. 1c), the upper edges are released, so that they can move towards the control element CTRL, thus again reducing the outer diameter of the surface elements in order to establish again the transport mode depicted in Fig. 1 a).

The shifting of the upper edges can be realised by suitable protrusions which interact with the control element. These protrusion can shift the upper edges along the longitudinal axis of the carrier element C. One possible realisation of this interaction is shown in Fig. 3a. Inside the carrier element C, which is shown in cross section, a movable stick ST with protrusions P is situated. This stick S can be shifted along the longitudinal axis LA of the carrier element C by operating the control unit CTRL. The protrusions emerge from the carrier element C e.g. via slots.

Alternatively the protrusions can act upon the e.g. the middle of the cylindrical surface element. Therefore the protrusion are for the transport mode in Fig. 1a) inside the carrier element C. Upon screwing they come forward and thus exert force upon the elastic cylindrical surface element S for bending it outwards. This alternative realisation of the protrusions is shown in Fig. 3b), where the position of the protrusion is fixed relative to the longitudinal axis LA. The protrusions P are gradually emerging through a slot SL, thus extending the middle of a surface element outwards and hence increasing the outer diameter.

Instead of screwing the control element in opposite directions, the increasing of the diameter can take place by screwing until a first position. By further screwing the upper edges UE are released and the diameter thus diminished.

Alternatively to a screwable control element a push button can be used which upon being pushed forces or releases the upper edges.

The surface elements S can have variable length. Thereby the change of the outer diameter can vary depending on the individual length of a surface element S. This enables forming of a growing or diminishing diameter along the longitudinal axis LA in order to achieve ergonomic pen forms of the input element IE.

The mechanical complexity of an input element shown in Fig. 1 is low, which enables cheap production.

In Fig. 2 a further embodiment of the input device IE is depicted viewed from above. The carrier element C is encircled by three surface elements S. Instead of three also two or more than three input elements can be used.
In the transport mode depicted in Fig. 2a) the surface elements fit closely to the carrier element C. To increase the diameter of the input device IE each of the surface elements is pivoted by a corresponding pivot unit PU. Hence the position of each surface element can be changed such, that, as depicted in Fig. 2b a larger diameter is formed by the surface elements as a whole.
The number of surface elements can be increased in order to reduce the spacing d between individual, surface elements which are folded out.

For the embodiment shown in Fig. 2 the surface elements need can be made of non-elastic material, too. The pivoting unit PU is operated by the control unit CTRL.

For both embodiments the surface elements need not to cover the whole or nearly the whole carrier element C. Alternatively it can be foreseen, that surface elements are implemented only there, where the input element IE is being hold by the user.
Thus a further reduction of weight of the input device is achieved without any loss of handling comfort.

### Reference list

- C: carrier element
- CTRL: control unit
- d: distance between to surface elements, which are folded out
- DU: display unit
- E: element (on a display unit, representing information)
- ED: electronic device
- IE: input element
- LA: longitudinal axis
- LE: lower edge (of a surface element)
- P: Protrusion
- PU: pivoting unit
- S: surface element
- SL: slot
- ST: stick
- T: tip
- UE: upper edge (of a surface element)

## Claims

1. Input element (IE) for an electronic device (DE) having a display unit (DU) for displaying at least one element (E) representing input information, comprising
a) a pen-shaped carrier element (C) with a tip (T) for selecting the at least one element (E) from the display unit (DU), said carrier element (C) having a longitudinal axis;
b) at least one surface element (S) arranged around the carrier element (C) constituting an outer diameter of the input element;
c) a control element (CTRL) for altering the outer diameter of the input element (IE) by extending outwards or retracting inwards said at least one surface element (S) in respect to said longitudinal axis (LA) of said pen-shaped carrier element (C).

2. Input element (IE) according to claim 1, wherein said at least one surface element (S) is formed by an elastic, cylindrical element having a predetermined length and the outer diameter of said surface element (S) is altered by compressing the surface element (S) along its longitudinal axis and thus shortening its length or de-compressing the surface element (S) along its longitudinal axis and thus enlarging its length.

3. Input element (IE) according to claim 2, wherein a plurality of said surface elements (S) are arranged along at least a part of the length of the pen-shaped carrier element (C) and wherein by said control unit an upper edge (UE) of any surface element (S) is forced towards the tip (T) thus compressing the surface element (S).

4. Input element according to claim 3, wherein a lower edge (LE) of at least one surface element (S) is fixed in respect to the carrier element (C).

5. Input element according to claim 1, comprising at least two surface elements (S) with a respective pivoting unit (PU), said surface elements (S) fitting tightly around the pen-shaped carrier element (C) in a first position thereby forming a first outer diameter, and forming a second, larger outer diameter than said first outer diameter by pivoting outwards in a second position.

6. Input element (IE) according to any of the previous claims, wherein the control unit (CTRL) is a screwable unit on top of an end of the carrier element (C) opposite to the tip (T).

7. Input element (IE) according to any of the previous claims 1 to 5, wherein the control unit (CTRL) is formed by a push button.

8. Input element according to any of the previous claims, wherein the control unit (CTRL) and the surface elements (S) interact via protrusions which emerge controlled by the control unit (CTRL) from the carrier element (C) and exert a force on the surface element (S).
